# EUROPEAN PATENT SPECIFICATION

(11) **EP 3 598 219 B1**
(45) Date of publication and mention of the grant of the patent: **30.12.2020**
(21) Application number: 19759276.9
(22) Date of filing: 14.03.2019
(51) Int. Cl.: G02F 1/167, G02F 1/1333, G02F 1/1339

(54) **BARRIER RIB PATTERN FILM AND MANUFACTURING METHOD THEREFOR**
FOLIE MIT SPERRRIPPENMUSTER UND HERSTELLUNGSVERFAHREN DAFÜR
FILM À MOTIF NERVURÉ DE BARRIÈRE ET SON PROCÉDÉ DE FABRICATION

(30) Priority: 17.04.2018 KR 20180044325
(43) Date of publication of application: 22.01.2020
(73) Proprietor: LG Chem, Ltd., Seoul 07336 (KR)
(72) Inventor: SON, Yong Goo, Daejeon 34122 (KR); BAE, Nam Seok, Daejeon 34122 (KR); LEE, Seung Hon, Daejeon 34122 (KR)
(74) Representative: Goddar, Heinz J.
(86) International application number: PCT/KR2019/002948
(87) International publication number: WO 2019/203446

(56) References cited:
- JP-A- 2013 057 875
- KR-A- 20130 040 997
- KR-A- 20160 146 566
- KR-A- 20170 054 918
- KR-A- 20170 061 984
- KR-A- 20180 010 485
- US-A1- 2006 119 568
- US-A1- 2007 120 812

## Description

### [Technical Field]

This application claims priority to and the benefit of Korean Patent Application No. 10-2018-0044325 filed with the Korean Intellectual Property Office on April 17, 2018.

The present application relates to a partition wall pattern film and a method of manufacturing the same.

### [Background Art]

An electrophoretic variable transmittance film is easy to transmit and block light entering from outside and thus may be used as a smart window for building, a sunroof for a vehicle, and a light blocking film for a transparent display.

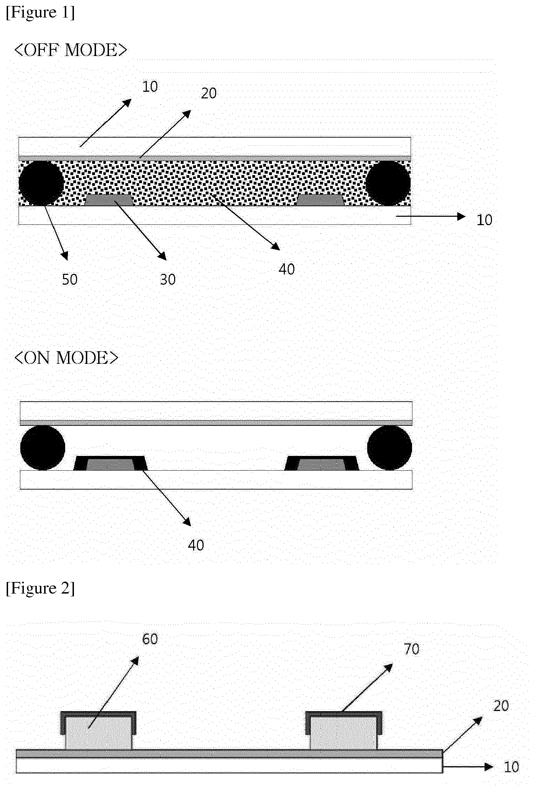

FIG. 1 is a view illustrating an operating principle of an electrophoretic variable transmittance film in the related art which operates in a light blocking mode and a light transmitting mode.

In general, as illustrated in FIG. 1, in order to switch from the light blocking mode to the light transmitting mode, a positive voltage is applied to a metal electrode pattern, and negatively charged nanoparticles are concentrated on the metal electrode pattern having a relatively small electrode width, such that the light blocking mode may be converted into the light transmitting mode.

However, there is a problem in that visibility is increased because of ball spacers used to maintain a distance between the metal electrode pattern and a transparent substrate in the electrophoretic variable transmittance film.

Electrophoretic variable transmittance films comprising a partition wall pattern are known from JP 2013-57875, US 2007/0120812 A1, and US 2006/0119568 A1.

### [Detailed Description of the Invention]

### [Technical Problem]

The present application has been made in an effort to provide a partition wall pattern film and a method of manufacturing the same.

### [Technical Solution]

The partition wall pattern film of the invention is defined in appended claim 1 and the method of manufacturing the partition wall pattern film according to the invention is defined in claim 8. In the following description, although numerous features are designated as optionally, e.g. by being introduced by "may" or "can", it is nevertheless acknowledged that all features comprised in each of the independent claims are not to be read as optional.

An exemplary embodiment of the present application provides a partition wall pattern film comprising: a transparent substrate; a first electrode layer provided on the transparent substrate; a partition wall pattern directly provided on the first electrode layer; and a second electrode layer pattern provided on an entire upper surface and at least a part of a lateral surface of the partition wall pattern.

In addition, another exemplary embodiment of the present application provides a method of manufacturing a partition wall pattern film, the method comprising: forming a first electrode layer on a first transparent substrate; forming a partition wall pattern directly on the first electrode layer; and forming a second electrode layer pattern on an entire upper surface and at least a part of a lateral surface of the partition wall pattern.

In addition, still another exemplary embodiment of the present application provides a variable transmittance film comprising the partition wall pattern film.

### [Advantageous Effects]

According to the exemplary embodiment of the present application, since the second electrode layer pattern is provided on the entire upper surface and at least a part of the lateral surface of the partition wall pattern, it is possible to exclude a separate metal mesh electrode film that was applied in the related art. Therefore, it is possible to reduce manufacturing process costs, and because the second electrode layer pattern, which corresponds to the partition wall pattern in a one-to-one manner, is provided, it is possible to prevent a decrease in variable transmittance range and an increase in haze which are caused by applying the metal mesh electrode film.

In addition, a leakage of light occurs at a partition wall pattern in a light blocking mode in the case of the variable transmittance film comprising the partition wall pattern in the related art. However, in the variable transmittance film comprising the partition wall pattern film according to the exemplary embodiment of the present application, the second electrode layer pattern provided on the upper surface of the partition wall pattern may serve as a light blocking layer, and as a result, it is possible to prevent a leakage of light.

In addition, two electrode films were required to be coated with electrode insulating layers, respectively, in the case of a variable transmittance film comprising a partition wall pattern in the related art. However, because the electrode insulating layer coating can be applied once to the variable transmittance film comprising the partition wall pattern film according to the exemplary embodiment of the present application, it is possible to simplify the manufacturing process.

### [Brief Description of Drawings]

FIG. 1 is a view schematically illustrating a variable transmittance film in the related art.
FIG. 2 is a view schematically illustrating a partition wall pattern film according to an exemplary embodiment of the present application.
FIG. 3 is a view schematically illustrating a method of manufacturing a partition wall pattern film according to an exemplary embodiment of the present application.
FIG. 4 is a view schematically illustrating a method of manufacturing a variable transmittance film in the related art.
FIG. 5 is a view schematically illustrating a method of manufacturing a variable transmittance film according to an exemplary embodiment of the present application.
FIG. 6 is a view illustrating an SEM image of a partition wall pattern film according to Example 1 of the present application.
FIG. 7 is a view illustrating an SEM image of a partition wall pattern film according to Comparative Example 1 of the present application.

### [Description of Reference Numerals]

10: Transparent substrate
20: First electrode layer
30: Second electrode pattern
40: Negatively (-) charged carbon black nanoparticles
50: Ball spacer
60: Partition wall pattern
70: Second electrode layer pattern
80: Transparent UV resin
90: Second electrode layer
100: Electrode insulating layer

### [Best Mode]

Hereinafter, the present application will be described in detail.

In the present application, the term "transparent" means that transmittance is about 80% or higher in a visible ray region (400 nm to 700 nm).

Typically, it is essential to use a transparent electrode film and a metal pattern electrode film in order to manufacture an electrophoretic variable transmittance film. In addition, a cell gap needs to be maintained in order to inject an electrophoretic substance such as a negatively (-) charged carbon black particle dispersed solution between the two electrode films. To this end, a ball spacer, a column spacer pattern, or a partition wall pattern needs to be provided. A variable transmittance film in the related art is schematically illustrated in FIG. 1.

In addition, because both a metal mesh electrode pattern and a partition wall pattern are applied in the related art, there are problems in that a variable transmittance region is decreased, light scattering is increased, and a haze is increased.

Therefore, the present application is intended to provide a partition wall pattern film and a method of manufacturing the same which are capable of solving the above-mentioned problems.

The partition wall pattern film according to the exemplary embodiment of the present application comprises: a transparent substrate; a first electrode layer provided on the transparent substrate; a partition wall pattern directly provided on the first electrode layer; and a second electrode layer pattern provided on an entire upper surface and at least a part of a lateral surface of the partition wall pattern.

In the present application, the transparent substrate may be, but not limited to, a glass base or a transparent plastic base which is excellent in transparency, surface smoothness, tractability, and waterproofness, and the transparent base is not limited as long as the transparent base is typically used for electronic elements. Specifically, the transparent base may be made of glass; urethane resin; polyimide resin; polyester resin; (meth)acrylate-based polymeric resin; or polyolefin-based resin such as polyethylene or polypropylene.

In the present application, the first electrode layer may comprise a transparent conductive oxide, and the second electrode layer pattern may comprise metal or a metal alloy. More specifically, the first electrode layer may comprise, but not limited only to, one or more of an indium oxide, a zinc oxide, an indium tin oxide, an indium zinc oxide, and an indium zinc tin oxide. In addition, the second electrode layer pattern may comprise, but not limited only to, gold, silver, aluminum, copper, neodymium, molybdenum, nickel, or an alloy thereof.

In the present application, a line height of the partition wall pattern may be 5 µm or more, and a line width of the partition wall pattern may be 30 µm or less. In addition, a line height of the partition wall pattern may be 5 µm to 50 µm, and a line width of the partition wall pattern may be 5 µm to 30 µm. If the line height of the partition wall pattern is less than 5 µm, a distance between a transparent electrode and a metal electrode pattern substrate is decreased, such that the content of negatively (-) charged nanoparticles in a dispersion liquid is excessively increased in order to ensure the transmittance of 1% or less in the light blocking mode, and as a result, there may be a problem in that a dispersion property of the negatively (-) charged nanoparticles deteriorates when a variable transmittance element operates. In addition, if the line height of the partition wall pattern is more than 50 µm, the distance between the transparent electrode and the metal electrode pattern substrate is increased, and as a result, an operating speed may be decreased. A cell gap between the electrodes may be determined based on the line height of the partition wall pattern. More specifically, if the cell gap is small, concentration of a light blocking dispersion liquid may be increased in order to ensure a light blocking property, and an excessive increase in concentration of charged particles may degrade dispersion stability. In addition, if the cell gap is large, intensity of an electric field formed between the transparent electrode and the metal pattern may be decreased, and an electrophoretic property, that is, a movement speed of particles may be decreased as the distance between the charged particles and the metal pattern is increased.

A line spacing of the partition wall pattern may be 100 µm to 1,000 µm. If the line spacing of the partition wall pattern is less than 100 µm, a variable transmittance range may be decreased due to an increase in area of a region of the partition wall pattern. If the line spacing of the partition wall pattern is more than 1,000 µm, an upper base may sag during a process of laminating the base on the partition wall pattern. In this case, the second electrode layer may be transferred to a region other than the partition wall pattern during the process of forming the second electrode layer pattern or it may be difficult to maintain a uniform cell gap of an electrophoretic element. There is no variable transmittance in a region in which the partition wall pattern is present, and as a result, an area of the variable transmittance region is decreased if the line spacing of the partition wall pattern is too small when the line width remains the same. In contrast, if the line spacing of the partition wall pattern is too large, a substrate (film) is deformed during a process of laminating a transparent electrode substrate and a metal pattern substrate, and as a result, bubbles may be produced, and uniformity of the cell gap may deteriorate.

In the exemplary embodiment of the present application, an additional dot pattern may be provided at a central portion of the partition wall pattern to increase the line spacing of the partition wall pattern in order to ensure the variable transmittance range. In this case, it is possible to minimize an increase in variable transmittance range and to prevent the base from sagging during a lamination process.

In the present application, the partition wall pattern may be made of a UV-curable resin composition, and the UV-curable resin composition may comprise, but not limited only to, one or more of an acrylic monomer, an acrylic oligomer, and a photoinitiator.

In the present application, the partition wall pattern may be formed by applying the UV-curable resin composition onto the first electrode layer and then performing a selective exposure process and a development process.

In the present application, the second electrode layer pattern is provided on an entire upper surface and at least a part of a lateral surface of the partition wall pattern.

A leakage of light occurs at a partition wall pattern in a light blocking mode in the case of the variable transmittance film comprising the partition wall pattern in the related art. However, in the variable transmittance film comprising the partition wall pattern film according to the exemplary embodiment of the present application, the second electrode layer pattern provided on the upper surface of the partition wall pattern may serve as a light blocking layer, and as a result, it is possible to prevent a leakage of light.

A thickness of the second electrode layer pattern may be 200 nm to 2 µm. If the thickness of the second electrode layer pattern is less than 200 nm, resistance of the electrode layer pattern may excessively increase, or a light blocking property may deteriorate. If the thickness of the second electrode layer pattern is more than 2 µm, there may be a problem in that a variable transmittance range is decreased as the line width of the partition wall pattern is increased.

The second electrode layer pattern may be provided on the entire upper surface of the partition wall pattern in order to ensure the light blocking property and implement electrical connection. In addition, the second electrode layer pattern may be provided on at least a part of the lateral surface of the partition wall pattern. A region of the second electrode layer pattern provided on at least a part of the lateral surface of the partition wall pattern may be 2 µm to a value, which is produced by subtracting 2 µm from the line height of the partition wall pattern, downward from the upper surface of the partition wall pattern. If the region of the second electrode layer pattern provided on at least a part of the lateral surface of the partition wall pattern is less than 2 µm downward from the upper surface of the partition wall pattern, an area of the electrode pattern for concentrating charged particles is decreased, and as a result, an electrophoretic property may deteriorate. In addition, if the region of the second electrode layer pattern provided on at least a part of the lateral surface of the partition wall pattern is more than the value, which is produced by subtracting 2 µm from the line height of the partition wall pattern, downward from the upper surface of the partition wall pattern, the first electrode layer disposed at a lower side may be electrically short-circuited due to metal migration.

The partition wall pattern film according to the exemplary embodiment of the present application is schematically illustrated in FIG. 2. As illustrated in FIG. 2, the partition wall pattern film according to the exemplary embodiment of the present application comprises: a transparent substrate 10; a first electrode layer 20 provided on the transparent substrate 10; a partition wall pattern 60 provided on the first electrode layer 20; and a second electrode layer pattern 70 provided on an entire upper surface and at least a part of a lateral surface of the partition wall pattern 60.

According to the exemplary embodiment of the present application, since the second electrode layer pattern is provided on the entire upper surface and at least a part of the lateral surface of the partition wall pattern, it is possible to exclude a separate metal mesh electrode film that was applied in the related art. Therefore, it is possible to reduce manufacturing process costs, and because the second electrode layer pattern, which corresponds to the partition wall pattern in a one-to-one manner, is provided, it is possible to prevent a decrease in variable transmittance range and an increase in haze which are caused by applying the metal mesh electrode film.

In the present application, an electrode insulating layer may be further provided on the partition wall pattern film. Two electrode films were required to be coated with electrode insulating layers, respectively, in the case of a variable transmittance film comprising a partition wall pattern in the related art. However, because the electrode insulating layer coating can be applied once to the variable transmittance film comprising the partition wall pattern film according to the exemplary embodiment of the present application, it is possible to simplify the manufacturing process.

The electrode insulating layer may be formed to have a thickness of 100 nm by curing a fluorine-based or silicon-based UV-curable resin composition having a surface energy of 20 dyne/cm or less by using bar coating, slot die coating, or the like. If the surface energy of the electrode insulating layer is more than 20 dyne/cm, negatively (-) charged nanoparticles are adsorbed on a surface of an electrode film, such that transmittance may be decreased in a light transmitting mode.

In addition, a method of manufacturing a partition wall pattern film according to the exemplary embodiment of the present application comprises: forming a first electrode layer on a first transparent substrate; forming a partition wall pattern directly on the first electrode layer; and forming a second electrode layer pattern on an entire upper surface and at least a part of a lateral surface of the partition wall pattern.

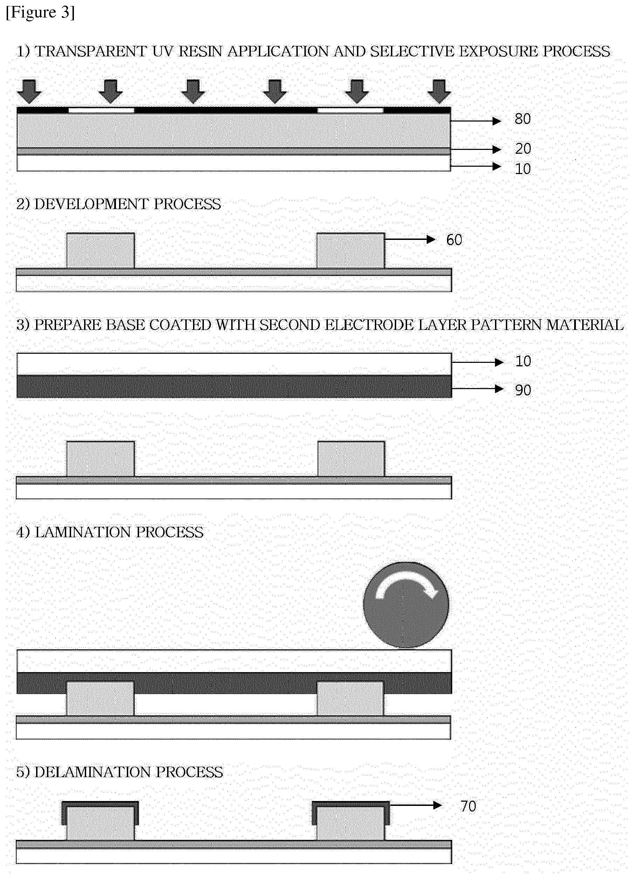

The method of manufacturing the partition wall pattern film according to the exemplary embodiment of the present application is schematically illustrated in FIG. 3. As illustrated in FIG. 3, the method of manufacturing the partition wall pattern film according to the exemplary embodiment of the present application comprises: forming the first electrode layer 20 on the first transparent substrate 10; forming the partition wall pattern 60 on the first electrode layer 20; and forming the second electrode layer pattern 70 on the entire upper surface and at least a part of the lateral surface of the partition wall pattern 60.

In the present application, the forming of the first electrode layer on the first transparent substrate may use a method known in this technical field. More specifically, the forming of the first electrode layer on the first transparent substrate may use, but not limited only to, a deposition process or the like.

In the exemplary embodiment of the present application, the forming of the second electrode layer pattern comprises: forming a second electrode layer on a second transparent substrate; forming the second electrode layer pattern on the entire upper surface and at least a part of the lateral surface of the partition wall pattern by laminating the second transparent substrate formed with the second electrode layer and the first transparent substrate formed with the partition wall pattern so that the second electrode layer and the partition wall pattern are in contact with each other; and removing the second transparent substrate formed with the second electrode layer and firing, i.e., thermally treating the second electrode layer pattern formed on the entire upper surface and at least a part of the lateral surface of the partition wall pattern.

A method of forming the second electrode layer on the second transparent substrate may use, but not limited only to, a method of coating the second transparent substrate with paste comprising metal or a metal alloy.

In addition, the exemplary embodiment of the present application provides a variable transmittance film comprising the partition wall pattern film.

The variable transmittance film according to the exemplary embodiment of the present application may be formed by using a material and a method which are known in this technical field, except that the variable transmittance film comprises the partition wall pattern film.

For example, the variable transmittance film may have a third transparent substrate provided on the partition wall pattern film. Negatively (-) charged nanoparticles are comprised between the partition wall pattern film and the third transparent substrate.

The negatively (-) charged nanoparticle may be, but not limited only to, a carbon black nanoparticle.

The variable transmittance film may be manufactured by using, but not limited only to, a method of preparing the above-mentioned variable transmittance film and then injecting a solution, in which the negatively (-) charged nanoparticles are dispersed, between the partition wall pattern film and the third transparent substrate.

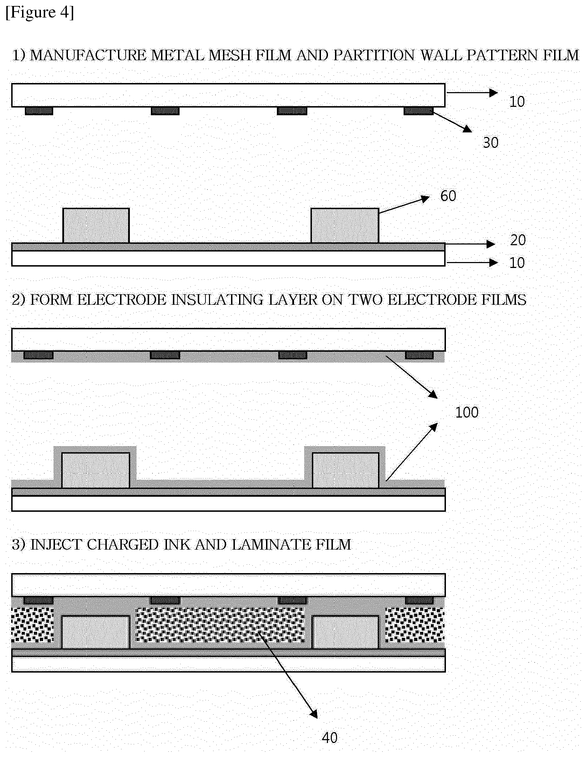

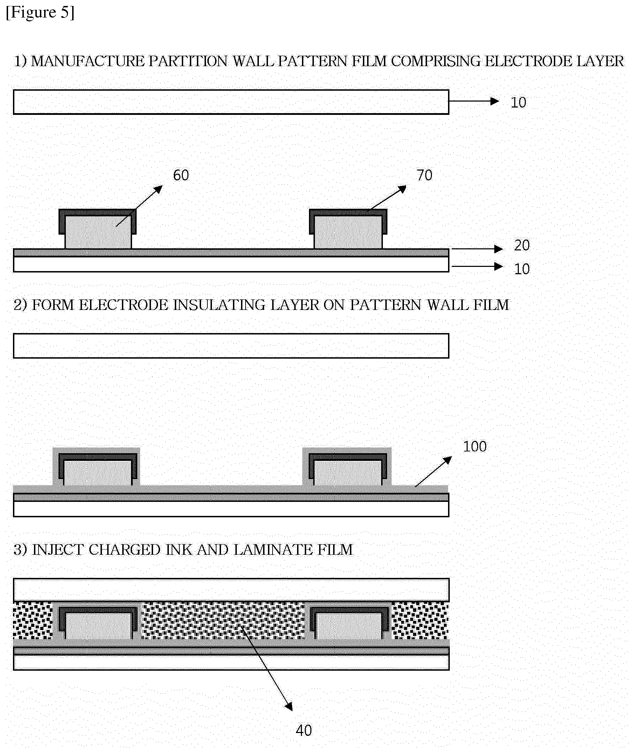

FIG. 4 schematically illustrates the method of manufacturing the variable transmittance film in the related art, and FIG. 5 schematically illustrates the method of manufacturing the variable transmittance film according to the exemplary embodiment of the present application. As illustrated in FIGS. 4 and 5, two electrode films were required to be coated with electrode insulating layers, respectively, in the case of the variable transmittance film comprising a partition wall pattern in the related art. However, because the electrode insulating layer coating can be applied once to the variable transmittance film comprising the partition wall pattern film according to the exemplary embodiment of the present application, it is possible to simplify the manufacturing process.

In the present application, the variable transmittance film may be operated by electrophoresis. The transmittance is decreased when the variable transmittance film according to the exemplary embodiment of the present application is in an OFF mode. The transmittance may be increased as the negatively (-) charged nanoparticles are concentrated on the metal pattern, which is a positive (+) electrode, due to the electrophoresis, in an ON mode in which a voltage is applied to the first electrode layer and the second electrode layer pattern.

### [Mode for Invention]

Hereinafter, the exemplary embodiment disclosed in the present specification will be described with reference to Examples. However, the scope of the exemplary embodiment is not intended to be limited by the following Examples.

### <Examples>

### <Example 1>

### 1) Manufacture of Transparent UV-Curable Resin Composition

A transparent UV-curable resin composition was manufactured with compositions shown in Table 1.

**[Table 1]**

| Product Name | Manufacturer | Content (wt.%) |
|---|---|---|
| CN9010 NS (Alicyclic urethane acrylate monomer) | Sartomer | 28.5 |
| CN8004 (Alicyclic urethane acrylate monomer) | Sartomer | 28.5 |
| SR444NS (Pentaerythritol triacrylate) | Sartomer | 38 |
| Irgacure 184 (Photoinitiator) | Ciba | 4 |
| SR9051 (Attachment force enhancer) | Sartomer | 1 |
| Sum | | 100 |

### 2) Manufacture of Transparent Partition Wall Pattern Film

The transparent UV-curable resin composition was applied onto an ITO film having surface resistance of 150 Ω/sq., and then a photo imprinting mask was roll-pressed with a pressure of 0.5 MPa and at a rate of 0.1 mpm. The laminate was irradiated, from above thereof, with exposure energy of 200 mJ/cm² by using a UV curing device with a wavelength of 365 nm, and then a photo imprinting mold was separated from the ITO film. The ITO film having a transparent partition wall pattern was manufactured by immersing the exposed ITO film in a developer (LSG-202. LG Chem, Ltd.) for 2 minutes and then washing the ITO film.

The partition wall pattern manufactured by the photo imprinting process had a line width of 20 µm, a line height of 25 µm, and a line spacing of 500 µm.

### 3) Forming of Second Electrode Layer Pattern

The transparent partition wall pattern film was fixed onto a stone surface plate having excellent smoothness.

Silver ink (TEC-PR-041, InkTec Inc.) having a thickness of 1 µm was applied onto an upper portion of a glass substrate having a thickness of 1 mm by using a spin coating method, and then an upper portion of the fixed transparent partition wall pattern film was brought into contact with the surface of the glass substrate onto which the silver ink was applied. The contact state was maintained for 5 minutes without applying a separate pressure, and then the glass substrate was removed. The partition wall pattern film was separated from the stone surface plate, and then the silver ink was sintered by performing a firing process at 130°C for 20 minutes.

### <Comparative Example 1>

A process identical to the process of Example 1 was performed without applying the process of forming the second electrode layer pattern in Example 1.

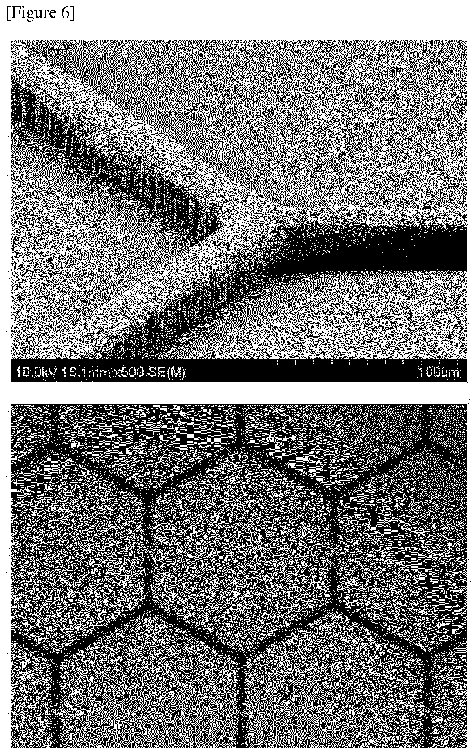

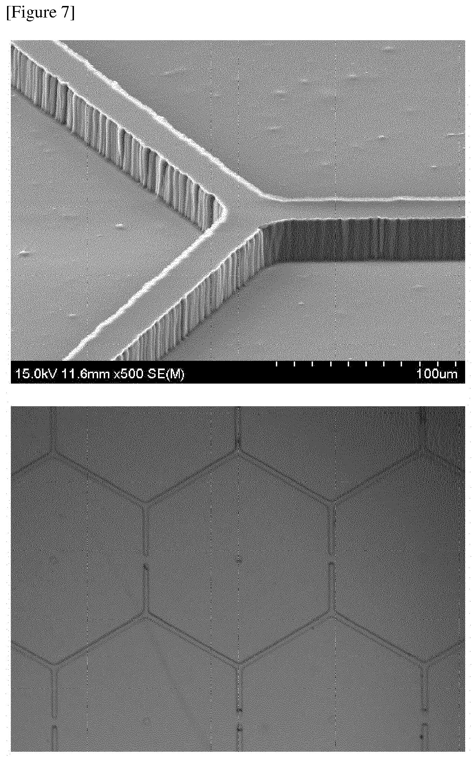

FIG. 6 illustrates an SEM image of the partition wall pattern film according to Example 1 of the present application, and FIG. 7 illustrates an SEM image of the partition wall pattern film according to Comparative Example 1 of the present application.

As a result, according to the exemplary embodiment of the present application, since the second electrode layer pattern is provided on the entire upper surface and at least a part of the lateral surface of the partition wall pattern, it is possible to exclude a separate metal mesh electrode film that was applied in the related art. Therefore, it is possible to reduce manufacturing process costs, and because the second electrode layer pattern, which corresponds to the partition wall pattern in a one-to-one manner, is provided, it is possible to prevent a decrease in variable transmittance range and an increase in haze which are caused by applying the metal mesh electrode film.

In addition, a leakage of light occurs at a partition wall pattern in a light blocking mode in the case of the variable transmittance film comprising the partition wall pattern in the related art. However, in the variable transmittance film comprising the partition wall pattern film according to the exemplary embodiment of the present application, the second electrode layer pattern provided on the upper surface of the partition wall pattern may serve as a light blocking layer, and as a result, it is possible to prevent a leakage of light.

In addition, two electrode films were required to be coated with electrode insulating layers, respectively, in the case of a variable transmittance film comprising a partition wall pattern in the related art. However, because the electrode insulating layer coating can be applied once to the variable transmittance film comprising the partition wall pattern film according to the exemplary embodiment of the present application, it is possible to simplify the manufacturing process.

## Claims

1. A partition wall pattern film suitable for use in an electrophoretic variable transmittance film, the partition wall pattern comprising:
a transparent substrate (10);
a first electrode layer (20) provided on the transparent substrate;
a partition wall pattern (60) directly provided on the first electrode layer; and
a second electrode layer pattern (70) provided on an entire upper surface of the partition wall pattern and on at least a part of a lateral surface of the partition wall pattern extending downward from the upper surface of the partition wall pattern,
wherein the thickness of the second electrode layer pattern is 200 nm to 2 µm, and
wherein the line height of the region of the second electrode layer pattern provided on at least a part of the lateral surface of the partition wall pattern is from 2 µm up to a value, which is obtained by subtracting 2 µm from the line height of the partition wall pattern, thereby preventing a short-circuit from occurring between the first electrode layer and the second electrode layer pattern.

2. The partition wall pattern film of claim 1, wherein the first electrode layer comprises a transparent conductive oxide, and the second electrode layer pattern comprises metal or a metal alloy.

3. The partition wall pattern film of claim 2, wherein the first electrode layer comprises one or more of an indium oxide, a zinc oxide, an indium tin oxide, an indium zinc oxide, and an indium zinc tin oxide.

4. The partition wall pattern film of claim 2, wherein the second electrode layer pattern comprises gold, silver, aluminum, copper, neodymium, molybdenum, nickel, or an alloy thereof.

5. The partition wall pattern film of claim 1, wherein a line height of the partition wall pattern is 5 µm or more.

6. The partition wall pattern film of claim 1, wherein a line width of the partition wall pattern is 30 µm or less.

7. The partition wall pattern film of claim 1, wherein a line spacing of the partition wall pattern is 100 µm to 1,000 µm.

8. A method of manufacturing a partition wall pattern film suitable for use in an electrophoretic variable transmittance film, the method comprising:
forming a first electrode layer (20) on a first transparent substrate (10);
forming a partition wall pattern (60) directly on the first electrode layer; and
forming a second electrode layer pattern (70) on an entire upper surface of the partition wall pattern and on at least a part of a lateral surface of the partition wall pattern extending downward from the upper surface of the partition wall pattern,
wherein the thickness of the second electrode layer pattern is 200 nm to 2 µm,
wherein the line height of the region of the second electrode layer pattern provided on at least a part of the lateral surface of the partition wall pattern is from 2 µm up to a value, which is obtained by subtracting 2 µm from the line height of the partition wall pattern, thereby preventing a short-circuit from occurring between the first electrode layer and the second electrode layer pattern, and
wherein the forming of the second electrode layer pattern comprises:
forming a second electrode layer (90) on a second transparent substrate (10);
forming the second electrode layer pattern on the entire upper surface and at least a part of the lateral surface of the partition wall pattern by laminating the second transparent substrate formed with the second electrode layer and the first transparent substrate formed with the partition wall pattern so that the second electrode layer and the partition wall pattern are in contact with each other; and
removing the second transparent substrate formed with the second electrode layer and thermally treating the second electrode layer pattern formed on the entire upper surface and at least a part of the lateral surface of the partition wall pattern.

9. The method of claim 8, further comprising:
forming an electrode insulating layer (100) on the partition wall pattern film after the forming of the second electrode layer pattern.

10. A variable transmittance film comprising the partition wall pattern film according to any one of claims 1 to 7.

11. The variable transmittance film of claim 10, wherein an electrode insulating layer (100) is provided on the partition wall pattern film.

12. The variable transmittance film of claim 10 or claim 11, wherein the variable transmittance film is operated by electrophoresis.

## Patentansprüche

1. Film mit einem Trennwandmuster, geeignet zur Verwendung in einem elektrophoretischen Film mit variabler Durchlässigkeit, wobei das Trennwandmuster umfasst:
ein transparentes Substrat (10);
eine erste Elektrodenschicht (20), die auf dem transparenten Substrat angeordnet ist; und
ein zweites Elektrodenschichtmuster (70), das auf einer gesamten oberen Oberfläche des Trennwandmusters und mindestens einem Teil einer Seitenfläche des Trennwandmusters vorgesehen ist, die sich von der oberen Oberfläche des Trennwandmusters nach unten erstreckt,
wobei die Dicke des zweiten Elektrodenschichtmusters 200 nm bis 2 µm beträgt, und
wobei die Linienhöhe des Bereichs des zweiten Elektrodenschichtmusters, das auf mindestens einem Teil der Seitenfläche des Trennwandmusters vorgesehen ist, von 2 µm bis zu einem Wert beträgt, der durch Subtrahieren von 2 µm von der Linienhöhe des Trennwandmusters erhalten wird, wodurch das Auftreten eines Kurzschlusses zwischen der ersten Elektrodenschicht und dem zweiten Elektrodenschichtmuster verhindert wird.

2. Film mit einem Trennwandmuster nach Anspruch 1, wobei die erste Elektrodenschicht ein transparentes leitfähiges Oxid umfasst und das zweite Elektrodenschichtmuster Metall oder eine Metalllegierung umfasst.

3. Film mit einem Trennwandmuster nach Anspruch 2, wobei die erste Elektrodenschicht ein oder mehrere aus einem Indiumzinnoxid, einem Zinkoxid, einem Indiumzinnoxid, einem Indiumzinkoxid und einem Indiumzinkzinnoxid umfasst.

4. Film mit einem Trennwandmuster nach Anspruch 2, wobei das zweite Elektrodenschichtmuster Gold, Silber, Aluminium, Kupfer, Neodym, Molybdän, Nickel oder eine Legierung davon umfasst.

5. Film mit einem Trennwandmuster nach Anspruch 1, wobei die Linienhöhe des Trennwandmusters 5 µm oder mehr beträgt.

6. Film mit einem Trennwandmuster nach Anspruch 1, wobei die Linienbreite des Trennwandmusters 30 µm oder weniger beträgt.

7. Film mit einem Trennwandmuster nach Anspruch 1, wobei der Zeilenabstand des Trennwandmusters 100 µm bis 1.000 µm beträgt.

8. Verfahren zum Herstellen eines Films mit Trennwandmuster, geeignet zur Verwendung in einem elektrophoretischen Film mit variabler Durchlässigkeit, wobei das Verfahren umfasst:
Bilden einer ersten Elektrodenschicht (20) auf einem ersten transparenten Substrat (10);
Bilden eines Trennwandmusters (60) direkt auf der ersten Elektrodenschicht;
und
Bilden eines zweiten Elektrodenschichtmusters (70) auf einer gesamten oberen Oberfläche des Trennwandmusters und zumindest einem Teil einer Seitenfläche des Trennwandmusters, die sich von der oberen Fläche des Trennwandmusters nach unten erstreckt,
wobei die Dicke des zweiten Elektrodenschichtmusters 200 nm bis 2 µm ist,
wobei die Linienhöhe des Bereichs des zweiten Elektrodenschichtmusters, das auf zumindest einem Teil der Seitenfläche des Trennwandmusters bereitgestellt ist, von 2 µm bis zu einem Wert ist, der durch Subtrahieren von 2 µm von der Linienhöhe des Trennwandmusters erhalten wird, wodurch das Auftreten eines Kurzschlusses zwischen der ersten Elektrodenschicht und dem zweiten Elektrodenschichtmuster verhindert wird, und
wobei das Bilden des zweiten Elektrodenschichtmusters umfasst:
das Bilden einer zweiten Elektrodenschicht (90) auf einem zweiten transparenten Substrat (10);
Bilden des zweiten Elektrodenschichtmusters auf der gesamten oberen Oberfläche und mindestens einem Teil der seitlichen Oberfläche des Trennmusters durch Laminieren des zweiten transparenten Substrats, das mit der zweiten Elektrodenschicht gebildet ist, und des ersten transparenten Substrats, das mit dem Trennwandmuster ausgebildet ist, so dass die zweite Elektrodenschicht und das Trennwandmuster miteinander in Kontakt sind; und
Entfernen des zweiten transparenten Substrats, das mit der zweiten Elektrodenschicht gebildet ist, und thermisches Behandeln des zweiten Elektrodenschichtmusters, das auf der gesamten oberen Oberfläche und zumindest einem Teil der seitlichen Oberfläche des Trennwandmusters gebildet ist.

9. Verfahren nach Anspruch 8, ferner umfassend:
Bilden einer Elektrodenisolierschicht (100) auf dem Film mit einem Trennwandmuster nach dem Bilden des zweiten Elektrodenschichtmusters.

10. Film mit variabler Durchlässigkeit, umfassend den Film mit einem Trennwandmuster nach einem der Ansprüche 1 bis 7.

11. Film mit variabler Durchlässigkeit nach Anspruch 10, wobei eine Elektrodenisolierschicht (100) auf dem Film mit Trennwandmuster bereitgestellt ist.

12. Film mit variabler Durchlässigkeit nach Anspruch 10 oder 11, wobei der Film mit variabler Durchlässigkeit durch Elektrophorese betrieben wird.

## Revendications

1. Film à motif pour cloison de séparation conçu pour une utilisation dans un film électrophorétique à transmittance variable, la cloison de séparation comprenant :
un substrat transparent (10)
une première couche d'électrode (20) prévue sur le substrat transparent ;
un motif pour cloison de séparation (60) directement placé sur la première couche d'électrode ; et
un motif pour deuxième couche d'électrode (70) prévu sur toute la surface supérieure du motif pour cloison de séparation et au moins sur une partie de la surface latérale du motif pour cloison de séparation, le motif s'étendant vers le bas à partir de la surface supérieure du motif pour cloison de séparation, dans lequel l'épaisseur du motif pour deuxième couche d'électrode est de 200 nm à 2 µm, et dans lequel la hauteur de ligne de la zone du motif pour deuxième couche d'électrode prévu sur au moins une partie de la surface latérale du motif pour cloison de séparation va de 2 µm jusqu'à une valeur qui est obtenue en soustrayant 2 µm de la hauteur de ligne du motif pour cloison de séparation, prévenant ainsi la survenue d'un court-circuit entre le motif pour première couche d'électrode et le motif pour deuxième couche d'électrode.

2. Film à motif pour cloison de séparation selon la revendication 1, dans lequel la première couche d'électrode comprend un oxyde conducteur transparent et le motif pour deuxième couche d'électrode comprend un métal ou un alliage de métal.

3. Film à motif pour cloison de séparation selon la revendication 2, dans lequel la première couche d'électrode comprend un ou plusieurs composés parmi un oxyde d'indium, un oxyde de zinc, un oxyde d'indium et d'étain, un oxyde d'indium et de zinc et un oxyde d'indium, de zinc et d'étain.

4. Film à motif pour cloison de séparation selon la revendication 2, dans lequel le motif pour deuxième couche d'électrode comprend de l'or, de l'argent, de l'aluminium, du cuivre, du néodymium, du molybdénum, du nickel ou un alliage de ceux-ci.

5. Film à motif pour cloison de séparation selon la revendication 1, dans lequel une hauteur de ligne du motif pour cloison de séparation est de 5 µm ou supérieure.

6. Film à motif pour cloison de séparation selon la revendication 1, dans lequel une largeur de ligne du motif pour cloison de séparation est de 30 µm ou inférieure.

7. Film à motif pour cloison de séparation selon la revendication 1, dans lequel un espacement de ligne du motif pour cloison de séparation est de 100 µm à 1.000 µm.

8. Procédé de fabrication d'un film à motif pour cloison de séparation conçu pour une utilisation dans un film électrophorétique à transmittance variable, le procédé comprenant les étapes consistant à :
former une première couche d'électrode (20) sur un premier substrat transparent (10) ;
former un motif pour cloison de séparation (60) directement sur la première couche d'électrode ; et
former un motif pour deuxième couche d'électrode (70) sur toute une surface supérieure du motif pour cloison de séparation et sur au moins une partie de la surface latérale du motif pour cloison de séparation s'étendant vers le bas depuis la surface supérieure du motif pour cloison de séparation, dans lequel l'épaisseur du motif pour deuxième électrode est de 200 nm à 2 µm, dans lequel la hauteur de ligne de la zone du motif pour deuxième couche d'électrode prévu sur au moins une partie de la surface latérale du motif pour cloison de séparation va de 2 µm jusqu'à une valeur qui est obtenue en soustrayant 2 µm de la hauteur de ligne du motif pour cloison de séparation, prévenant ainsi la survenue d'un court-circuit entre le motif pour première couche d'électrode et le motif pour deuxième couche d'électrode, et
dans lequel la formation du motif pour deuxième couche d'électrode comprend les étapes consistant à :
former une deuxième couche d'électrode (90) sur un deuxième substrat transparent (10) ;
former le motif pour deuxième couche d'électrode sur toute la surface supérieure et au moins une partie de la surface latérale du motif pour cloison de séparation par stratification du deuxième substrat transparent formé avec la deuxième couche d'électrode et du premier substrat transparent formé avec le motif pour cloison de séparation de manière à ce que la deuxième couche d'électrode et le motif pour cloison de séparation soient en contact l'un avec l'autre ; et
retirer le deuxième substrat transparent formé avec la deuxième couche d'électrode et traiter thermiquement le motif pour deuxième couche d'électrode formée sur toute la surface supérieure et au moins sur une partie de la surface latérale du motif pour cloison de séparation.

9. Procédé selon la revendication 8, comprenant en outre la formation d'une couche isolante d'électrode (100) sur le film à motif pour cloison de séparation après la formation du motif pour deuxième couche d'électrode.

10. Film à transmittance variable comprenant le film à motif pour cloison de séparation selon l'une quelconque des revendications 1 à 7.

11. Film à transmittance variable selon la revendication 10, dans lequel la couche isolante d'électrode (100) est placée sur le film à motif pour cloison de séparation.

12. Film à transmittance variable selon la revendication 10 ou la revendication 11, dans lequel le film à transmittance variable est opéré par électrophorèse.
